# EUROPEAN PATENT APPLICATION

(11) **EP 1 976 205 A1**
(43) Date of publication of application: **01.10.2008**
(21) Application number: 06817901.9
(22) Date of filing: 27.11.2006
(51) Int. Cl.: H04L 12/58

(54) **A METHOD, SERVER AND SYSTEM FOR SUBSCRIBING PRESENCE INFORMATION**

(30) Priority: 21.01.2006 CN 200610033227
(71) Applicant: Huawei Technologies Co., Ltd., Longgang District, Shenzhen Guangdong 518129 (CN)
(72) Inventor: HE, Qin, Guangdong 518129 (CN)
(74) Representative: Pfenning, Meinig & Partner GbR
(86) International application number: PCT/CN2006/003178
(87) International publication number: WO 2007/082445

(57) **Abstract**

A method, server and system for subscribing presence information includes: receiving the request of subscribing presence information from subscriber; obtaining the public group allowed to be subscribed from authorization regulation of the presence information promulgator; obtaining the members list of the public group; if the subscriber is member of the public group, creating presence information document according to authorization regulation and sending the presence information document to subscriber. By use of the invention, user could totally configure authorization regulation for all the members in the whole public group one-off, no need of configuring for each member in the group one by one; that saves operation steps and time, which makes user experience IMS service better.

## Description

### Field of the Invention

The present invention relates to the technical field of communications, in particular, to a method, a server and a system for subscribing for Presence Information.

### Background of the Invention

Presence service is a kind of enabling service in IP Multimedia Subsystem (IMS) services. This enabling service can provide separate Presence service to an IMS user, and meanwhile, it can be taken as an enabling component (server) of other IMS services.

The Presence service mainly includes the following functions: a user is able to publish his Presence Information to a Presence Server, the presence information includes basic information, aspiration information, capability information, state information and so on of the user; the user is also able to subscribe for the Presence Information of other users referred to as presentity from the Presence Server, wherein during the validity period of the subscription, the Presence Server will inform the watcher of the Presence Information of the presentity; and the presentity is able to set the subscription authorization policy - or referred to as authorization rule, wherein the subscription authorization policy is used for limiting opening degree of the Presence Information to the watcher.

The Presence Server filters the Presence Information of a presentity according to the subscription authorization policy set by the presentity. However, if a watcher also has a filtration rule (watcher filter) for the a Presentity, the Presence Server may filter again according to the watcher filter, and form a notification message finally and send the notification message to the watcher.

In the prior art, a presentity sets the subscription authorization rules for various conditions of different watchers, and the Presence Server generates a notification message according to the subscription authorization rules set by the presentity, the filtration rule and Partial Notification principle of the watcher and so on, and sends the notification message to the watcher.

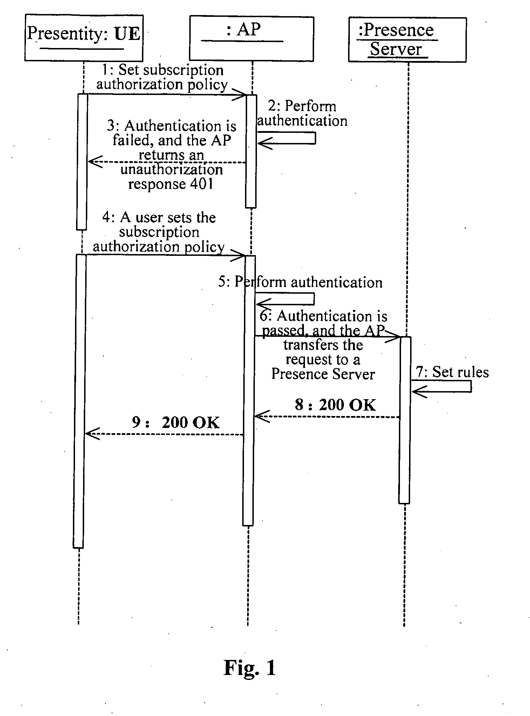

Figure 1 is a flowchart illustrating a process of setting subscription authorization rules for a presentity in the prior art. Specifically, as shown in Figure 1, the process of setting subscription authorization includes the following two situations:

The case in which authentication is failed

Process 1, a user acting as the Presence Information publisher referred to as a presentity sets the subscription authorization policy; Process 2, an Aggregation Proxy (AP) performs authentication; Process 3, authentication is failed, and the AP returns an unauthorization response 401;

The case in which authentication is passed

Process 4, a presentity acting as the Presence Information publisher sets the subscription authorization policy; Process 5, the AP performs authentication; Process 6, the authentication is passed, and the AP transfers a request to a Presence Server; Process 7, the Presence Server sets a corresponding authorization rule for the presentity; Process 8, the Presence Server returns a success response, such as 200 OK; Process 9, the AP returns the success response, such as 200 OK.

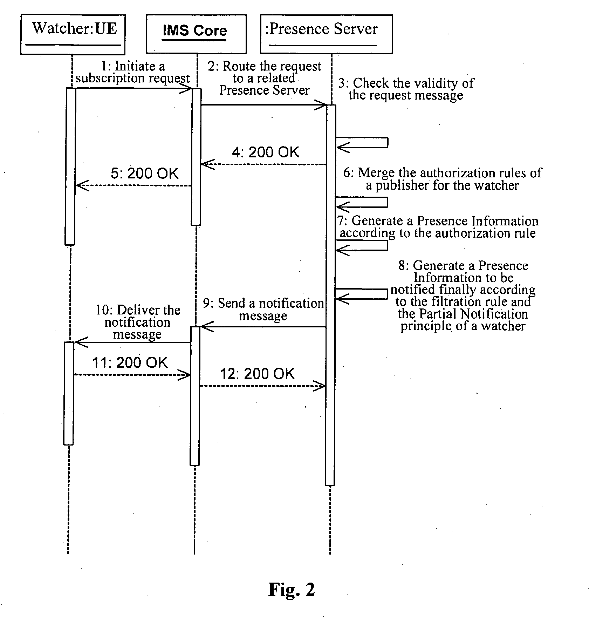

Figure 2 is a flowchart illustrating a subscription processing mechanism of a Presence Server in the prior art. As shown in Figure 2, the corresponding processing procedure includes the following processes. Process 1, a watcher, such as a watcher client, initiates a subscription request; Process 2, the Core Network (IMS Core) routes the request to a related Presence Server; Process 3, the Presence Server checks the validity of the request message, including the validity of the message body, rights, header field and so on; Process 4, if all of the validity checks are passed, the Presence Server returns a success response, such as 200 OK; Process 5, the Core Network returns a success response, such as 200 OK; Process 6, the Presence Server merges the authorization rules of a presentity for the watcher, that is, if the authorization rules made by the presentity include a plurality of authorization rules for the watcher, the authorization rules needs to be merged; Process 7, the Presence Server generates a Presence Information message according to the merged authorization rule; Process 8, the Presence Server further generates a Presence Information message for a final notification according to the filtration rule and the Partial Notification principle of a watcher, wherein the filtration rule and Partial Notification principle of the watcher may be preconfigured by the watcher and stored in the Presence Server, so that corresponding policy control may be performed on the Presence Information sent to the watcher, i.e. the Presence information sent by the presentity; Process 9, the Presence Server sends a notification message; Process 10, the Core Network delivers the notification message; Process 11, the watcher returns a success response, such as 200 OK; Process 12, the Core Network returns a success response, such as 200 OK.

It can be seen that in the prior art, information such as the public identification of an individual watcher, or the domain name of the watcher or the positional condition of the watcher may be taken as the conditions of the authorization rules.

At present, a concept of public group is put forward in this industry, wherein a public group includes a plurality of watchers. However, the current Presence Server does not have an authorization mechanism for the public identification of a group. Therefore, for group watchers, if an authorization operation needs to be performed on all the watchers in a group, it is needed to perform the above authorization operation on each watcher in the group one by one; that is, it is needed to add the public identification of each member in the group to the authorization rules respectively. Apparently, the corresponding operation process is rather complicated.

### Summary of the Invention

The invention provides a method, a server and a system for subscribing for Presence Information, by means of which a user equipment (UE) may be allowed to perform authorization on the whole public group with the existing mechanism for configuring authorization rules, so that the number and time of operations may be reduced, and all of the members in a public group may be authorized at a time.

The invention provides a method for subscribing for Presence Information, the method includes:

receiving a request from a watcher for subscribing for the Presence Information;

determining an authorization rule corresponding to the Presence Information which the watcher requests to subscribe for, wherein the authorization rule includes authorization rule information configured based on a public group; and

obtaining member information of the public group that is allowed to subscribe in the authorization rule, and generating a Presence Information according to the authorization rule and sending the Presence Information to the watcher if the watcher is a member of the public group.

The invention further provides a Presence Server, which includes: a device for receiving a request from a watcher for subscribing for Presence Information; a device for obtaining member information of a public group that is allowed to subscribe by an authorization rule configured based on a public group corresponding to the Presence Information; a device for determining whether the watcher is a member of the public group; a device for generating a Presence Information message according to the authorization rule based on a determination result; and a device for sending the Presence Information message.

The invention further provides a system for subscribing for Presence Information, which includes: a Presence Server and a watcher client connected with the Presence Server via a network, wherein the Presence Server is adapted to receive a request of a watcher for subscribing for the Presence Information from the watcher client, obtain member information of a public group that is allowed to subscribe according to an authorization rule configured based on a public group by a publisher of the Presence Information, generate a Presence Information message according to the authorization rule when it is determined that the watcher is a member of the public group, and send the Presence Information message to the watcher client.

It can be seen from the above technical solutions that in the invention, a mechanism for checking group members is added on the network side, so that it may be checked whether a watcher belongs to a certain public group that is authorized or rejected, and the authorization capability on the whole public group by cooperating with the user and the network side may be realized.

Moreover, by implementing the above mechanism for checking a group member, the solution provided by the invention is able to support the authorization rule on a public group, so that Presence Information may be subscribed for based on the public identification of a group. Thus, for group users, the Presence Information does not need to be subscribed for one by one according to the public identification of each user. That is, in the invention, authorization rules may be configured based on public groups, so that the number and time of operations may be reduced effectively; in other words, by the invention, all of the members in a public group may be authorized at a time.

### Brief Description of the Drawings

Figure 1 is a flow chart showing a process in which a Presentity sets the subscription authorization rule in the prior art;

Figure 2 is a flow chart showing a subscription processing mechanism of a Presence Server in the prior art;

Figure 3 is a schematic diagram showing the structural networking of a system for implementing public group authorization and processing public group member subscription according to an embodiment of the invention;

Figure 4 is a flow chart showing the process of a mechanism of subscription processing by a Presence Server according to an embodiment of the invention;

Figure 5 is a flow chart showing the process of a mechanism for obtaining the member information of a public group from a group server by a Presence Server; and

Figure 6 is a schematic diagram showing the structure of a Presence Server and a system according to an embodiment of the invention.

### Detailed Description of the Embodiments

The invention will now be illustrated in more details in conjunction with the drawings and embodiments of the invention.

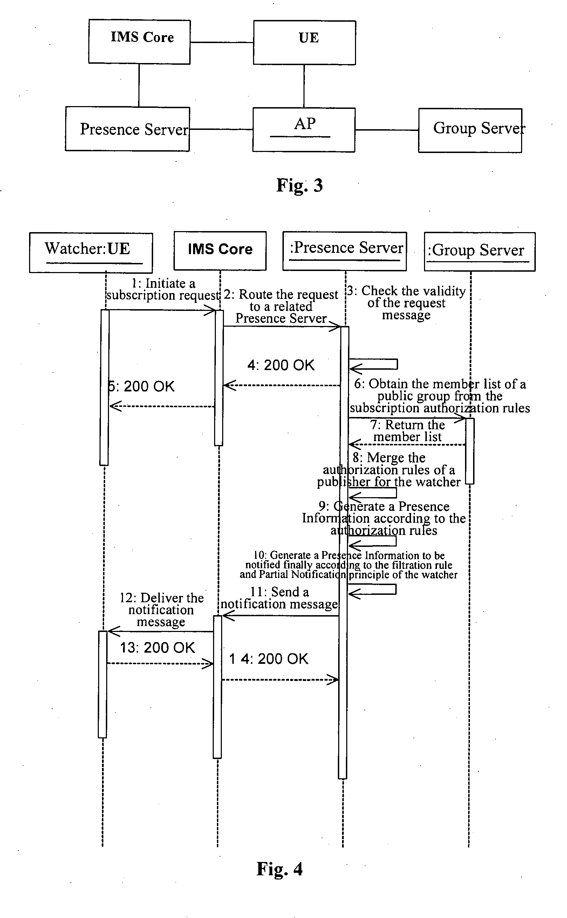

Figure 3 is a networking diagram of a system for implementing public group authorization and processing public group member subscription according to an embodiment of the invention. As shown in Figure 3, the system includes a Presence Server, an AP and a group server, etc. The mechanism for subscribing for Presence Information corresponding to the system includes the following processes: a user equipment (UE) subscribes for Presence Information from a Presence Server via a Core Network, wherein the Core Network includes network elements such as P-CSCF, I-CSCF, S-CSCF, HSS and so on. The UE manages its authorization policy via the AP, wherein the authorization policy is stored in the Presence Server; the UE manages group information via the AP, wherein the group information is stored in the group server; and the Presence Server further obtains the group member information via the AP, so that the mechanism for subscribing for Presence Information based on group may be realized.

1. A Presentity sets the authorization rule.

In the technical solution of an embodiment of the invention, authorization rules for all members of a public group are configured via an authorization mechanism, for example, the existing mechanism for configuring authorization rules. If the existing mechanism is used, the configuration process is the same as that described with reference to Figure 1.

Moreover, if the existing mechanism is used, the mechanism of the prior art may not need to be extended with respect to the function of configuring authorization rules by a presentity, because the format of the public identification of a public group is the same as that of the public identification of an ordinary watcher, such as groupname@domain and username@domain.

2. Mechanism for processing a subscription by a Presence Server

After a Presence Server receives a subscription request, the Presence Server should check the authorization rules for the watcher made by the presentity. In the solution of an embodiment of the invention, since the Presence Server may support group authorization, the Presence Server should obtain member information of the public group so as to check whether the watcher belongs to a certain public group in the authorization rules (it is hypothesized that the authorization policy of the presentity includes authorization rules for a public group).

For the above reasons, the solution of the embodiment of the invention may include a mechanism for obtaining the member information of a designated group by the Presence Server from a group server storing the public group information, to obtain the member information of the designated group. However, in an embodiment of the invention, the Presence Server may also obtain the member information of the designated group by other technical measures. For example, the group information is preconfigured, or the Presence Server requests to obtain the group information of the designated group from other entities storing the public group information, and so on.

Figure 4 is a schematic diagram showing the process of a mechanism of subscription processing by a Presence Server according to the invention, where the process in which a Presence Server obtains group member information from a group server is taken as an example. As shown in Figure 4, the mechanism for processing a subscription by a Presence Server may include the following processes:

Process 1 to Process 5 are the same as the existing mechanism shown in Figure 2. Process 6, the Presence Server obtains member list of a public group in the subscription authorization rules from the group server to obtain the member information of the public group; Process 7, the group server returns the member list to the Presence Server; Process 8, the Presence Server merges the authorization rules of a presentity for the watchers based on the member list; Process 9, the Presence Server generates a Presence Information according to the authorization rules; Process 10, the Presence Server generates a Presence Information to be notified finally according to the filtration rule and Partial Notification principle of the watcher; Process 11, the Presence Server sends a notification message carrying the second presence information; Process 12, the Core Network delivers the notification message; Process 13, the watcher client returns a success response, such as 200 OK; Process 14, the Core Network sends the success response, such as 200 OK.

In the Process 6, when the Presence Server receives a subscription request, the Presence Server should check the authorization policy of the presentity and extract the public identification of a public group related in the subscription authorization policy, and subscribe for the member list of the public group corresponding to the public identification from the group server.

In the Process 8, after the group server returns the member list, the Presence Server should check whether the watcher is a member of the public group, and merges all the authorization rules related to the watcher according to the check result. Specifically, if the watcher is a member of a certain public group, the authorization rules for the watcher are merged based on the authorization rules corresponding to the group.

In the above processing procedure, the process in which the Presence Server obtains the member information of a public group from the group server is the main processing procedure of an embodiment of the invention. The corresponding processing procedure will now be described in detail in conjunction with the drawings.

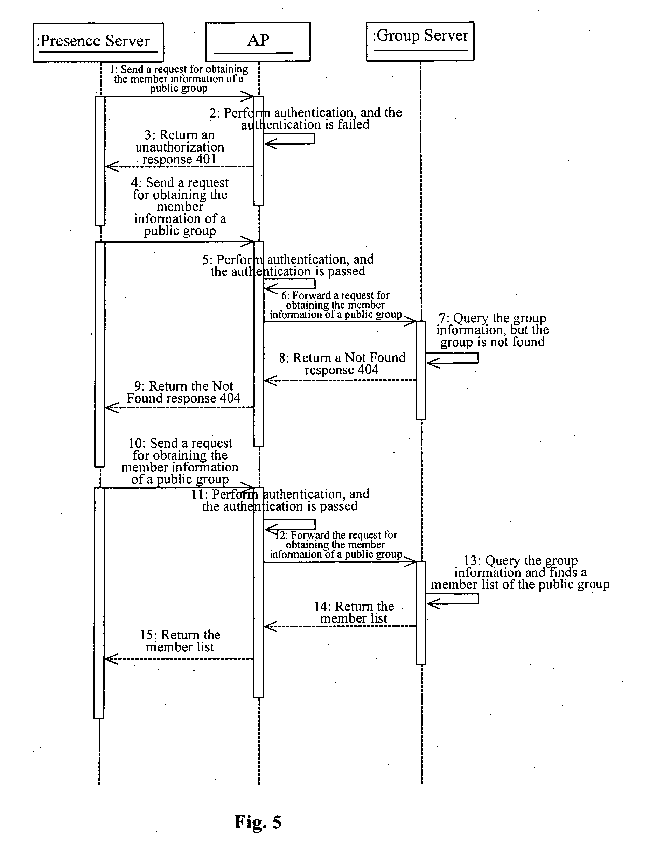

Figure 5 is a schematic diagram showing the process of a mechanism for obtaining the member information of a public group from a group server by a Presence Server. As shown in Figure 5, the corresponding processing procedure includes the following processes.

(1) The case in which authentication performed by an AP is failed

Process 1, a Presence Server sends a request for obtaining member information of a public group; Process 2, an AP performs authentication, and the result is that the authentication is failed; Process 3, the AP returns an unauthorized response 401 to the Presence Server;

(2) The case in which authentication performed by the AP is passed but the group server does not find the group

Process 4, the Presence Server sends a request for obtaining the member information of a public group; Process 5, the AP performs authentication on the request received, and the result is that the authentication is passed; Process 6, the AP forwards the request for obtaining the member information of the public group to a group server; Process 7, after the group server receives the request for obtaining the member information of the public group, it queries the group information, but the group is not found; Process 8, the group server returns a Not Found response 404 to the AP; Process 9, the AP returns the Not Found response 404 to the Presence Server.

(3) The case in which authentication performed by the AP is passed and the group server finds the group

Process 10, the Presence Server sends a request for obtaining the member information of a public group; Process 11, the AP performs authentication, and the result is that the authentication is passed; Process 12, the AP forwards the request for obtaining the member information of the public group to the group server; Process 13, after the group server receives the request for obtaining the member information of the public group, it queries the group information and finds a member list of the public group; Process 14, the group server returns the member list of the public group; Process 15, the AP returns the member list of the public group.

The processes in which a request for obtaining the member information of a public group from a group server by a Presence Server is failed or successful are described above respectively. Thus, the Presence Server may obtain the member information of a public group.

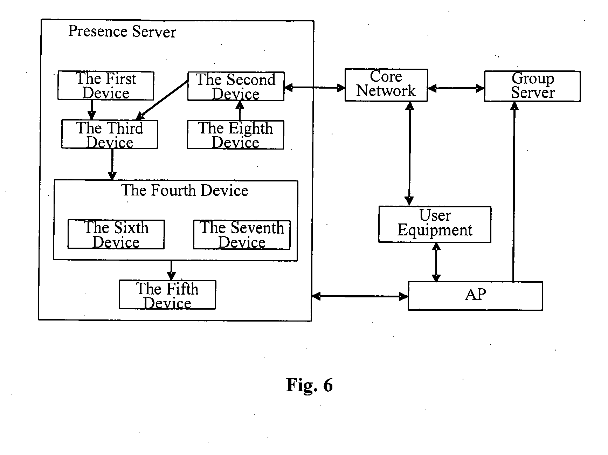

The invention further provides a Presence Server, which is connected with the user terminal device via network. The structure of the Presence Server is as shown in Figure 6, which includes the following components:

A first device, for receiving a request for subscribing for Presence Information from a watcher client;

A second device, for obtaining the member information of a public group allowed to subscribe in the authorization rules, where the authorization rules correspond to the Presence Information subscribed for in the request received by the first device;

A third device, for determining whether the watcher is a member of the public group, and determining whether the watcher of the request received by the first device is a member of the group according to the member information of the public group obtained by the second device;

A fourth device, for generating a Presence Information according to the authorization rules based on the determination result, and the fourth device may include: a sixth device for merging the authorization rules of the watcher,; or, a seventh device for generating a Presence Information message according to the filtration rule and/or Partial Notification principle of the watcher; and

A fifth device for sending the Presence Information message to the watcher client.

The Presence Server may further include an eighth device for storing the authorization rules configured based on the public group,; the eighth device is connected with the second device, for providing the second device with the information of the public group allowed to subscribe in the authorization rules, where the authorization rules correspond to the Presence Information subscribed in the request received by the first device, and specifically, for providing the second device with the identification of the corresponding public group. Specifically, the eighth device may be a device for storing authorization rules that already exists in the Presence Server.

Based on the above Presence Server, the invention further provides a system for subscribing for Presence Information. The structure of the system is as shown in Figure 6, which includes a Presence Server and a watcher client connected with the Presence Server via network, wherein the Presence Server is adapted to receive a request of a watcher for subscribing for Presence Information from a watcher client, obtain a public group that is allowed to subscribe in the authorization rules of the presentity of the Presence Information, generate a Presence Information message according to the authorization rules when it is determined that the watcher is a member of the public group, and send the Presence Information message to the watcher client.

The system may further include a group server for storing the member list of the public group, the group server is connected with the Presence Server via network, wherein the Presence Server sends the identification of the public group to the group server, and the group server returns the member list of the public group to the Presence Server according to the identification.

The system may further include an Aggregation Proxy (AP). The AP is connected between the watcher client and the group server, so that the watcher client may easily manage the public group via the AP; and/or, the AP is connected between the watcher client and the Presence Server, so that the watcher client may easily manage the authorization rules in the Presence Server via the AP.

The beneficial effect of the solutions according to the invention lies in that a user may set the authorization rules for all the members in the whole public group at a time, rather than configuring for each member one by one, and operation processes may be reduced and operation time may be shortened. As a result, users may have better experience in IMS service.

Additional advantages and modifications will readily occur to those skilled in the art. Therefore, the invention in its broader aspects is not limited to the specific details and representative embodiments shown and described herein. Accordingly, various modifications and variations may be made without departing from the spirit or scope of the invention as defined by the appended claims and their equivalents.

## Claims

1. A method for subscribing for Presence Information, comprising:
receiving a request from a watcher for subscribing for the Presence Information;
determining an authorization rule corresponding to the Presence Information which the watcher requests to subscribe for, wherein the authorization rule comprises authorization rule information configured based on a public group; and
obtaining member information of the public group that is allowed to subscribe in the authorization rule, and generating a Presence Information message according to the authorization rule, and sending the Presence Information message to the watcher if the watcher is a member of the public group.

2. The method for subscribing for Presence Information according to claim 1, wherein the process of generating the Presence Information message according to the authorization rule comprises: merging authorization rules of the watcher, and/or generating the Presence Information message according to a filtration rule and/or a Partial Notification principle of the watcher.

3. The method for subscribing for Presence Information according to claim 1 or 2, wherein the method further comprises: configuring and storing the authorization rules configured based on the public group in advance.

4. A Presence Server, comprising:
a device, adapted to receive a request from a watcher for subscribing for Presence Information;
a device, adapted to obtain member information of a public group that is allowed to subscribe by an authorization rule, where the authorization rule corresponds to the Presence Information and is configured based on the public group;
a device, adapted to determine whether the watcher is a member of the public group;
a device, adapted to generate a Presence Information message according to the authorization rule based on a determination result; and a device, adapted to send the Presence Information message.

5. The Presence Server according to claim 4, wherein the device for generating the Presence Information message according to the authorization rule comprises: a device for merging authorization rules of the watcher; and/or
a device, adapted to generate the Presence Information message according to a filtration rule and/or a Partial Notification principle of the watcher.

6. The Presence Server according to claim 4 or 5, further comprises: an device, adapted to store the authorization rule configured based on the public group.

7. A system for subscribing for Presence Information, comprising a Presence Server and a watcher client connected with the Presence Server via a network, wherein the Presence Server is adapted to receive a request of a watcher for subscribing for the Presence Information from the watcher client, obtain member information of a public group that is allowed to subscribe according to an authorization rule configured based on a public group by a publisher of the Presence Information, generate a Presence Information message according to the authorization rule if a watcher corresponding to the watcher client is a member of the public group, and send the Presence Information message to the watcher client.

8. The system for subscribing for Presence Information according to claim 7, further comprises:
a group server, adapted to store the member information of the public group, and connected with the Presence Server via the network the Presence Server sends an identification of the public group to the group server, and the group server returns the member information of the public group to the Presence Server according to the identification.

9. The system for subscribing for Presence Information according to claim 8, further comprises:
an Aggregation Proxy, connected between the watcher client and the group server;
wherein the watcher client manages the public group in the group server via the Aggregation Proxy.

10. The system for subscribing for Presence Information according to claim 7, further comprises:
an Aggregation Proxy, connected between the watcher client and the Presence Server;
wherein the watcher client manages the authorization rule in the Presence Server via the Aggregation Proxy.
